# EUROPEAN PATENT APPLICATION

(11) **EP 4 456 297 A1**
(43) Date of publication of application: **30.10.2024**
(21) Application number: 22956885.2
(22) Date of filing: 31.08.2022
(51) Int. Cl.: H01M 50/258, H01M 50/211, H01M 50/51

(54) **BATTERY AND ELECTRICAL DEVICE**

(71) Applicant: Contemporary Amperex Technology Co., Limited, Ningde, Fujian 352100 (CN)
(72) Inventor: CHENG, Qi, Ningde, Fujian 352100 (CN); WANG, Hong, Ningde, Fujian 352100 (CN); LI, Quankun, Ningde, Fujian 352100 (CN); LIU, Jiang, Ningde, Fujian 352100 (CN); TANG, Daichun, Ningde, Fujian 352100 (CN)
(74) Representative: Jacob, Reuben Ellis
(86) International application number: PCT/CN2022/116246
(87) International publication number: WO 2024/045056

(57) **Abstract**

Embodiments of the present application provide a battery and an electrical device. The battery comprises: a battery module, comprising a first battery cell and a second battery cell which are arranged in series in a first direction, wherein a first electrode output portion of the first battery cell and a second electrode output portion of the second battery cell are electrically connected in a welding manner, and the first direction is the length direction of the battery; and a support, provided between the first battery cell and the second battery cell, the support being provided with a first accommodating space, the first accommodating space passing through the support in the first direction, and the first accommodating space being used for accommodating the first electrode output portion and the second electrode output portion. The battery and the electrical device provided in the embodiments of the present application can reduce a tearing risk at a connection position of battery cells.

## Description

### TECHNICAL FIELD

The present application relates to the technical field of batteries, in particular to a battery and a power consuming device.

### BACKGROUND

To improve the capacity of a battery, multiple battery cells connected in series are usually encapsulated in a case with a certain strength to form the battery. Because the reliability of a battery during operation is related to the safety of the whole battery and even a power consuming device, there are higher requirements for the electrical connection stability of the battery in battery design.

### SUMMARY

The present application provides a battery and a power consuming device, which can reduce the risk of tearing at a joint between battery cells, thereby improving the electrical connection stability of the battery.

In a first aspect, a battery is provided, including: a battery module, including a first battery cell and a second battery cell connected in series along a first direction, where a first electrode output portion of the first battery cell is electrically connected to a second electrode output portion of the second battery cell by means of welding, and the first direction is a length direction of the battery; and a support, arranged between the first battery cell and the second battery cell, where the support is provided with a first accommodating space penetrating through the support in the first direction and configured to accommodate the first electrode output portion and the second electrode output portion.

In this embodiment, the support is arranged between the first battery cell and the second battery cell connected in series, and connecting portions of the first battery cell and the second battery cell are arranged in the first accommodating space of the support, such that the joint between the battery cells can be better fixed to prevent shaking of the joint, thereby reducing the risk of tearing at the joint and improving the electrical connection stability of the battery.

In a possible implementation, the support includes: a support body; and a first fixing member, stacked with the support body in a third direction, the third direction being a thickness direction of the battery; where the first fixing member is fixedly connected to the support body, and the first electrode output portion and the second electrode output portion are arranged in the first accommodating space formed between the support body and the first fixing member.

In this embodiment, by the support body and the first fixing member stacked in the third direction, the first accommodating space restricting the movement of the first electrode output portion and the second electrode output portion in the third direction can be formed, thereby reducing the risk of tearing at a joint between the first electrode output portion and the second electrode output portion.

In a possible implementation, the support body includes a first end and a second end in a second direction, where the first fixing member is fixedly connected to the first end, and the first fixing member and the second end form an opening.

In this embodiment, the first fixing member is fixedly connected to the first end of the support body in the second direction, such that when assembled with the support, the battery module can be inserted into the first accommodating space along the opening between the first fixing member and the second end of the support body in the second direction, thereby reducing the assembly complexity of the battery module and the support. In addition, the first fixing member is fixedly connected to the first end of the support body, which can increase the energy density of the battery.

In a possible implementation, the first fixing member includes a first wall and two first side walls, the first wall being arranged opposite to the support body, the two first side walls extending towards the support body from two ends of the first wall in the first direction, respectively; and the two first side walls and the support body form the first accommodating space in the third direction.

In this embodiment, the first fixing member has a cavity, which can reduce the weight of the support, thereby reducing the weight of the battery.

In a possible implementation, first reinforcing ribs extending towards the support body from the first wall are arranged between the two first side walls.

In this embodiment, the first reinforcing ribs are arranged on the first wall, which can enhance the stiffness of the first wall.

In the third direction, the first reinforcing ribs are closer to the first electrode output portion and the second electrode output portion than the two first side walls.

In this embodiment, in the third direction, the first reinforcing ribs are set to be closer to the first electrode output portion and the second electrode output portion than the two first side walls, which facilitates the support of the first electrode output portion and the second electrode output portion, thereby avoiding the shaking of the first electrode output portion and the second electrode output portion.

In a possible implementation, the multiple first reinforcing ribs are distributed at intervals along the first direction or the second direction; alternatively, the multiple first reinforcing ribs are distributed crosswise along the first direction and the second direction.

In this embodiment, the multiple first reinforcing ribs are arranged along the first direction and the second direction, which can enhance the fixation of the first electrode output portion and the second electrode output portion.

In a possible implementation, the first wall is provided with a first adhesive injection flow hole configured to introduce a structural adhesive between the first electrode output portion and the support and between the second electrode output portion and the support; and the first electrode output portion and the second electrode output portion are fixedly connected to the support by the structural adhesive.

In this embodiment, the first electrode output portion and the second electrode output portion are fixedly connected to the support by the structural adhesive, which can enhance the stiffness between the battery module and the support, thereby avoiding the shaking of the first electrode output portion and the second electrode output portion in the first accommodating space of the support after the first electrode output portion is electrically connected to the second electrode output portion, and reducing the risk of tearing.

In a possible implementation, the battery module further includes a third battery cell and a fourth battery cell connected in series along the first direction, where a third electrode output portion of the third battery cell is electrically connected to a fourth electrode output portion of the fourth battery cell by means of welding, the third battery cell and the first battery cell are stacked along the third direction, and the fourth battery cell and the second battery cell are stacked along the third direction; and the support further includes a second fixing member stacked with the support body in the third direction, where the support body is arranged between the first fixing member and the second fixing member; where the second fixing member is fixedly connected to the support body, and the third electrode output portion and the fourth electrode output portion are arranged in a second accommodating space between the support body and the second fixing member.

In this embodiment, the connecting portions of two pairs of adjacent battery cells arranged along two rows are fixed using one support, which can enhance the overall strength of two adjacent rows of battery cells, and increase the energy density of the battery.

In a possible implementation, in the third direction, the second fixing member and the first fixing member are symmetrically arranged relative to the support body.

In this embodiment, the second fixing member and the first fixing member are symmetrically arranged relative to the support body, which can reduce the production difficulty of the support.

In a possible implementation, the support body has a cavity.

In this embodiment, the support body is set to be in a structure with the cavity, which can reduce the weight of the support, thereby reducing the weight of the battery.

In a possible implementation, at least one wall of the cavity is provided with a second adhesive injection flow hole configured to introduce a structural adhesive between the support and at least one of the first battery cell, the second battery cell, the third battery cell, and the fourth battery cell; and the at least one battery cell is fixedly connected to the support by the structural adhesive.

In this embodiment, the battery cells are fixedly connected to the support by the structural adhesive, which can enhance the stiffness between the battery module and the support, thereby preventing relative movement of the battery module and the support, and reducing the damage to the battery cells.

In a possible implementation, a wall of the support body that is configured to support the first electrode output portion and the second electrode output portion is provided with a first accommodating groove, the first accommodating groove accommodating a first sampling terminal configured to acquire a parameter of the first battery cell and/or the second battery cell.

In this embodiment, the wall of the support body that is configured to support the first electrode output portion and the second electrode output portion is provided with the first accommodating groove to accommodate the first sampling terminal, such that the first battery cell and/or the second battery cell can be monitored in real time, thereby improving the safety of the battery.

In a possible implementation, the first accommodating groove further accommodates a structural adhesive fixedly connecting the first sampling terminal to the support.

In this embodiment, the first sampling terminal is fixedly connected to the support by the structural adhesive, which can avoid the shaking of the first sampling terminal, thereby improving the sampling accuracy of the first sampling terminal.

In a possible implementation, in the second direction, a size of the support is greater than a size of the battery module; and/or in the third direction, a size of the support is greater than a size of the battery module.

In this embodiment, in the third direction and the second direction, the sizes of the support are set to be greater than the sizes of the battery module, respectively, such that when the battery is subjected to vibration and shock, the support can be first in contact with a case to play a buffering role, thereby reducing the damage to the battery cells.

In a possible implementation, the battery further includes a case configured to accommodate the battery module and the support.

In this embodiment, the battery module and the support are arranged in the case, which can reduce the risk of damage to the battery cells when the battery is subjected to vibration and shock.

In a possible implementation, the case is provided with an opening along the first direction; and the battery further includes an end cover configured to cover the opening to encapsulate the battery module and the support in the case; where the end cover is provided with a positive electrode terminal and a negative electrode terminal, the positive electrode terminal being electrically connected to a positive electrode output portion of the battery module, the negative electrode terminal being electrically connected to a negative electrode output portion of the battery module.

In a second aspect, a power consuming device is provided, including the battery in the first aspect and any one possible implementation in the first aspect, where the battery is configured to provide electric energy for the power consuming device.

### BRIEF DESCRIPTION OF THE DRAWINGS

To more clearly illustrate the technical solutions in the embodiments of the present application, the accompanying drawings that need to be used in the embodiments of the present application will be briefly introduced below. Apparently, the accompanying drawings described below merely illustrate some embodiments of the present application. Those of ordinary skill in the art may also derive other accompanying drawings from the accompanying drawings without creative efforts.
FIG. 1 is a schematic structural diagram of a vehicle disclosed by an embodiment of the present application;
FIG. 2 is a schematic three-dimensional view of a battery disclosed by an embodiment of the present application;
FIG. 3 is a schematic three-dimensional view of another battery disclosed by an embodiment of the present application;
FIG. 4 is a schematic assembly diagram of a battery module and a support disclosed by an embodiment of the present application;
FIG. 5 is a schematic three-dimensional view of a support disclosed by an embodiment of the present application;
FIG. 6 is a front view of a support shown in FIG. 5;
FIG. 7 is a schematic enlarged view of an A portion in FIG. 5;
FIG. 8 is a right view of a support shown in FIG. 5;
FIG. 9 is a partial front view of a battery shown in FIG. 3;
FIG. 10 is a partial top view of a battery shown in FIG. 2 or FIG. 3; and
FIG. 11 is a schematic exploded view of a battery disclosed by the present application.

In the accompanying drawings, the accompanying drawings are not drawn in actual scale.

### DETAILED DESCRIPTION OF THE EMBODIMENTS

To make the objectives, technical solutions and advantages of the embodiments of the present application clearer, the technical solutions in the embodiments of the present application will be clearly described below with reference to the accompanying drawings in the embodiments of the present application. Apparently, the described embodiments are some rather than all of the embodiments of the present application. All other embodiments obtained by those of ordinary skill in the art based on the embodiments of the present application without creative efforts shall fall within the scope of protection of the present application.

Unless otherwise defined, all the technical and scientific terms used herein have the same meanings as those commonly understood by those skilled in the art of the present application. The terms used in the description of the present application are for the purpose of describing specific embodiments only and are not intended to limit the present application. The terms "include/comprise" and "have/has" and any variations thereof in the description and claims as well as the drawings of the present application are intended to cover a non-exclusive inclusion. The terms "first", "second", etc. in the description and claims or the above drawings of the present application are used to distinguish different objects and are not used to describe a particular order or primary-secondary relationship.

Orientation words occurring in the following description are all directions shown in the drawings and do not limit the specific structure of the present application. In the description of the present application, it should also be noted that, unless otherwise expressly specified and limited, the terms "mount", "joint", and "connect" should be understood in a broad sense, for example, it may be fixed connection, detachable connection, or being integrally connected; moreover, it may be being directly connected or indirectly connected by an intermediate medium. The specific meanings of the above terms in the present application may be understood by those of ordinary skill in the art depending on specific circumstances.

The mention of "embodiment" in the present application means that specific features, structures, or characteristics described in conjunction with the embodiments may be included in at least one embodiment of the present application. The occurrence of "embodiment" in various positions in the description does not necessarily refer to the same embodiment, nor is it a separate or alternative embodiment that is mutually exclusive to other embodiments. It is explicitly and implicitly understood by those skilled in the art that the embodiments described in the present application may be combined with other embodiments.

The term "and/or" in the present application is simply a description of the association relationship of the associated objects, indicating that three relationships can exist, for example, A and/or B, which can mean: A exists alone, both A and B exist, and B exists alone. In addition, the character "/" in the present application generally indicates an alternative relationship between the front and back associated objects.

As used in the present application, "multiple" refers to more than two (includes two), similarly, "multiple sets" refers to more than two sets (includes two sets), and "multichip" refers to more than two chips (includes two chips).

In the present application, the battery cell may include a lithium-ion secondary battery, a lithium-ion primary battery, a lithium-sulfur battery, a sodium and lithium-ion battery, a sodium-ion battery, or a magnesium-ion battery, which is not limited in the embodiment of the present application. A shape of the battery cell may be a cylinder, a flat body, a cuboid, or another shape, which also is not limited in the embodiment of the present application. The battery cell generally includes a cylindrical battery cell, a prismatic battery cell, and a pouch battery cell according to encapsulation modes, which also are not limited in the embodiment of the present application.

The battery cell includes an electrode assembly and an electrolyte, where the electrode assembly includes a positive plate, a negative plate, and a separator. The battery cell mainly operates relying on metal ions moving between the positive plate and the negative plate. The positive plate includes a positive current collector and a positive active material layer, where the positive active material layer coats a surface of the positive current collector, and the current collector not coated with the positive active material layer protrudes from the current collector coated with the positive active material layer and serves as a positive tab. By using the lithium-ion battery as an example, a material of the positive current collector may be aluminum, and the positive active material may be lithium cobaltate, lithium iron phosphate, ternary lithium, or lithium manganate. The negative plate includes a negative current collector and a negative active material layer, where the negative active material layer coats a surface of the negative current collector, and the current collector not coated with the negative active material layer protrudes from the current collector coated with the negative active material layer and serves as a negative tab. A material of the negative current collector may be copper, and the negative active material may be carbon or silicon. To ensure that there is no fusing when a high current passes, there are multiple positive tabs stacked together and multiple negative tabs stacked together. A material of the separator may be polypropylene (PP) or polyethylene (PE). In addition, the electrode assembly may be in a wound structure or a laminated structure, and the embodiment of the present application is not limited to this.

To improve the capacity of a battery, multiple battery cells connected in series are usually encapsulated in a case with a certain strength to form the battery. During use of the battery, a joint between the battery cells will shake, such that there is a risk of tearing.

In view of this, an embodiment of the present application provides a battery. A support is arranged between two battery cells connected in series, and connecting portions of the two battery cells are arranged in an accommodating space of the support, such that the joint between the battery cells can be better fixed to prevent shaking of the joint, thereby reducing the risk of tearing and improving the electrical connection stability of the battery.

The technical solutions described in the embodiments of the present application are all applicable to various devices using batteries, such as mobile phones, portable devices, laptops, battery cars, electric toys, electric tools, electric vehicles, ships, and spacecrafts. For example, the spacecrafts include airplanes, rockets, space shuttles, and spaceships.

It should be understood that the technical solutions described in the embodiments of the present application are applicable to not only the power consuming devices described above, but all devices using batteries. However, for the sake of simplicity, the following embodiments are all described using an electric vehicle as an example.

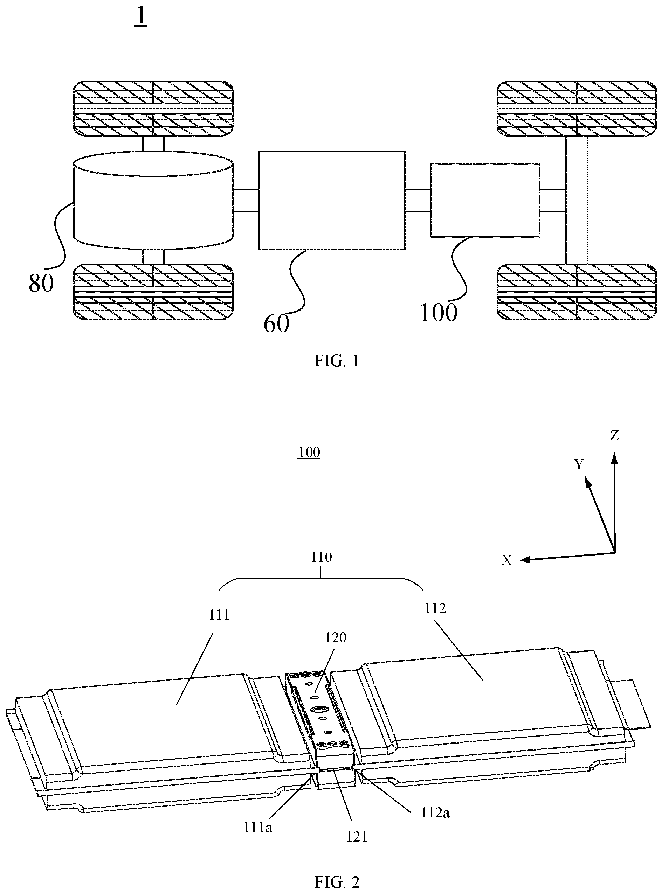

For example, as shown in FIG. 1 which is a schematic structural diagram of a vehicle 1 according to an embodiment of the present application, the vehicle 1 may be a fuel vehicle, a gas vehicle, or a new energy vehicle, where the new energy vehicle may be a battery electric vehicle, a hybrid electric vehicle, or an extended-range vehicle. A motor 80, a controller 60, and a battery 100 can be arranged inside the vehicle 1, where the controller 60 is configured to control the battery 100 to supply power to the motor 80. For example, the battery 100 can be arranged at a bottom, a front, or a rear of the vehicle 1. The battery 100 may be configured to supply power to the vehicle 1, for example, the battery 100 may serve as a power supply for operating the vehicle 1; and the battery may be configured for a circuit system of the vehicle 1, for example, the battery may be configured to meet power consuming requirements of the vehicle 1 during starting, navigation and operation. In another embodiment of the present application, the battery 100 may not only be used as a power supply for operating the vehicle 1, but also be used as a power supply for driving the vehicle 1, replacing or partially replacing fuel or natural gas, to provide driving power for the vehicle 1.

FIG. 2 shows a schematic three-dimensional view of a battery 100 according to an embodiment of the present application. As shown in FIG. 2, the battery 100 includes: a battery module 110, where the battery module 110 includes a first battery cell 111 and a second battery cell 112 connected in series along a first direction X, a first electrode output portion 111a of the first battery cell 111 is electrically connected to a second electrode output portion 112a of the second battery cell by means of welding, and the first direction X is a length direction of the battery 100; and a support 120, arranged between the first battery cell 111 and the second battery cell 112, where the support 120 is provided with a first accommodating space 121 penetrating through the support 120 in the first direction X and configured to accommodate the first electrode output portion 111a and the second electrode output portion 112a.

For the convenience of description, all directions are first defined herein. As shown in FIG. 2, the first direction X is the length direction of the battery 100, a second direction Y is a width direction of the battery 100, and a third direction Z is a thickness direction of the battery 100.

The electrode output portion in the present application may refer to a portion of a tab that penetrates through an outer package of the battery cell described above, or it may be understood as an electrical connection sheet electrically connected to the tab outside the outer package of the battery cell, which is not limited in the embodiment of the present application.

The battery module 110 in this embodiment of the present application may include multiple battery cells. The multiple battery cells are connected in series, that is, a positive electrode output portion of one battery cell is connected to a negative electrode output portion of another battery cell. The multiple battery cells may be as shown in FIG. 2 and are arranged in one row along the first direction X. Optionally, the multiple battery cells may also be arranged in multiple rows along the first direction X.

In this embodiment of the present application, the first electrode output portion 111a of the first battery cell 111 and the second electrode output portion 112a of the second battery cell 112 are electrically connected by means of welding, such as ultrasonic welding or laser welding. Optionally, the first electrode output portion 111a and the second electrode output portion 112a may be directly welded or indirectly welded by a connecting piece. The first electrode output portion 111a of the first battery cell 111 and the second electrode output portion 112a of the second battery cell 112 have been welded before the support 120 is assembled, such that only when the support 120 is provided with the first accommodating space 121 penetrating through the support 120 in the first direction, the connected first electrode output portion 111a and second electrode output portion 112a can penetrate into the first accommodating space 121 along the second direction Y, and the first accommodating space 121 accommodates the first electrode output portion 111a and the second electrode output portion 112a.

Therefore, in this embodiment, the support 120 is arranged between the first battery cell 111 and the second battery cell 112 connected in series, and connecting portions of the first battery cell 111 and the second battery cell 112 are arranged in the first accommodating space 121 of the support 120, such that the joint between the battery cells can be better fixed to prevent shaking of the j oint, thereby reducing the risk of tearing at the joint and improving the electrical connection stability of the battery 100; in addition, the support 120 can enhance the overall stiffness of the battery module 110, thereby facilitating the battery module 110 to be assembled into the case.

Although the embodiment of the present application is described using the connection between the first battery cell 111 and the second battery cell 112 as an example, when two or more battery cells are arranged in a row, the battery 100 according to the present application may include multiple supports. For the structure and function of each support, reference may be made to the support 120 between the first battery cell 111 and the second battery cell 112. For simplicity, supports between other battery cells are not described too much herein.

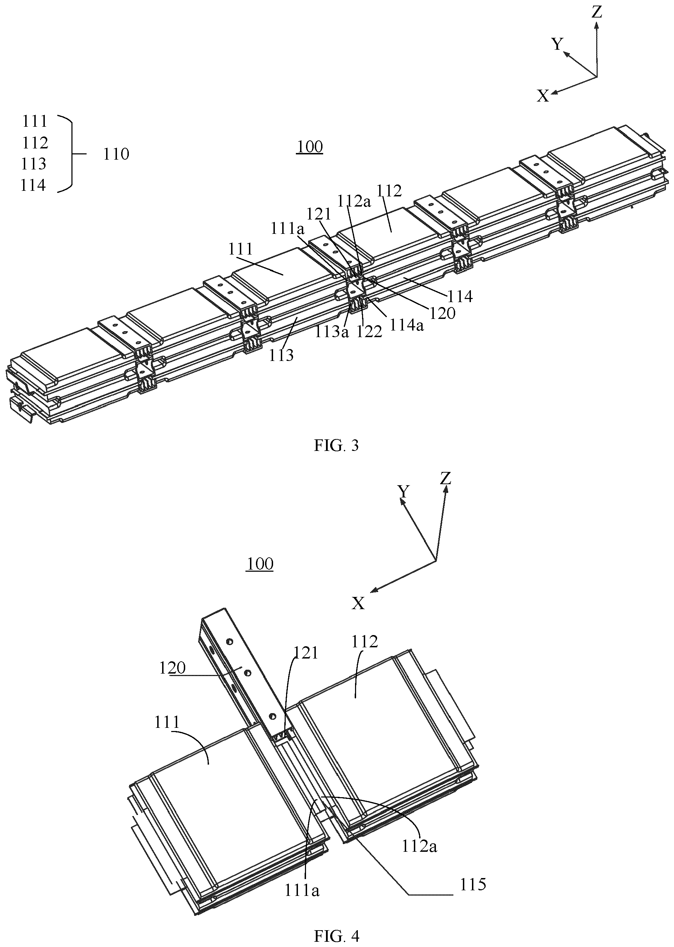

FIG. 3 shows another schematic three-dimensional view of a battery 100 according to an embodiment of the present application. As shown in FIG. 3, the battery 100 includes a battery module 110, the battery module 110 including a first battery cell 111 and a second battery cell 112 connected in series along a first direction X, and a third battery cell 113 and a fourth battery cell 114 connected in series along the first direction X, where the first battery cell 111 and the third battery cell 113 are stacked along a third direction, and the second battery cell 112 and the fourth battery cell 114 are stacked along the third direction. A first electrode output portion 111a of the first battery cell 111 and a second electrode output portion 112a of the second battery cell 112 are electrically connected by means of welding, and a third electrode output portion 113a of the third battery cell 113 and a fourth electrode output portion 114a of the fourth battery cell 114 are electrically connected by means of welding. The battery 100 further includes a support 120 provided with a first accommodating space 121 and a second accommodating space 122 arranged at an interval along the third direction Z, where the first accommodating space 121 is configured to accommodate the first electrode output portion 111a and the second electrode output portion 112a, and the second accommodating space 122 is configured to accommodate the third electrode output portion 113a and the fourth electrode output portion 114a.

In this embodiment, connecting portions of two pairs of adjacent battery cells arranged along two rows are fixed using one support 120, which can enhance the overall strength of two adjacent rows of battery cells, and increase the energy density of the battery 100.

Optionally, the first accommodating space 121 penetrates through the support 120 in the first direction X, and the second accommodating space 122 also penetrates through the support 120 in the first direction X.

It should be noted that when the multiple battery cells included in the battery module 110 in the present application are arranged in two or more rows along the first direction X, the support 120 may be provided with two or more accommodating spaces arranged at intervals along the third direction Z, where each accommodating space accommodates the connecting portions of the corresponding two battery cells, which is not limited in the embodiment of the present application.

FIG. 4 shows a schematic assembly diagram of a battery 100 according to an embodiment of the present application. As shown in FIG. 4, electrode output portions of two adjacent battery cells located in a same row need to be first welded. For example, the first electrode output portion 111a of the first battery cell 111 and the second electrode output portion 112a of the second battery cell 112 are welded at a welding point 115. One of the first electrode output portion 111a and the second electrode output portion 112a is a negative electrode output portion, and the other thereof is a positive electrode output portion. Further, the support 120 can be inserted along the second direction Y between two adjacent battery cells. For example, welding positions of the first electrode output portion 111a of the first battery cell 111 and the second electrode output portion 112a of the second battery cell 112 are inserted into the first accommodating space 121 of the support 120, until the support 120 is across the entire battery cell in the second direction Y.

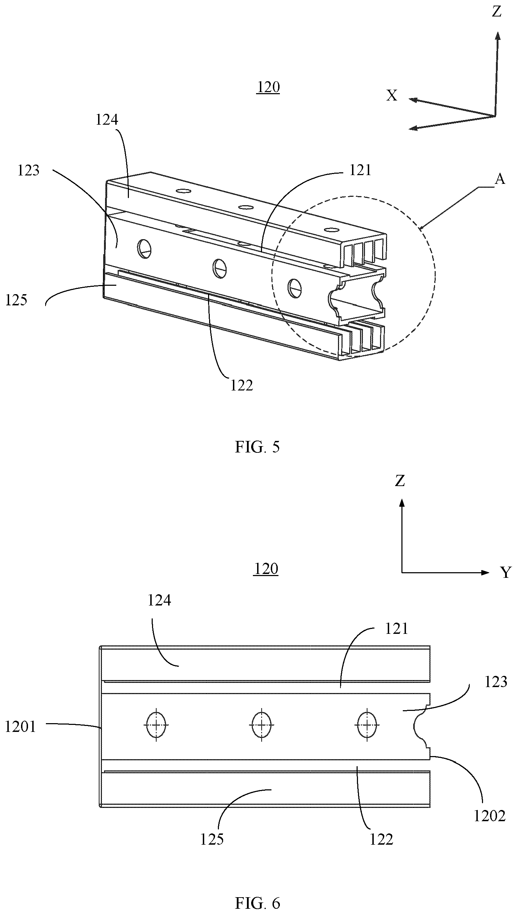

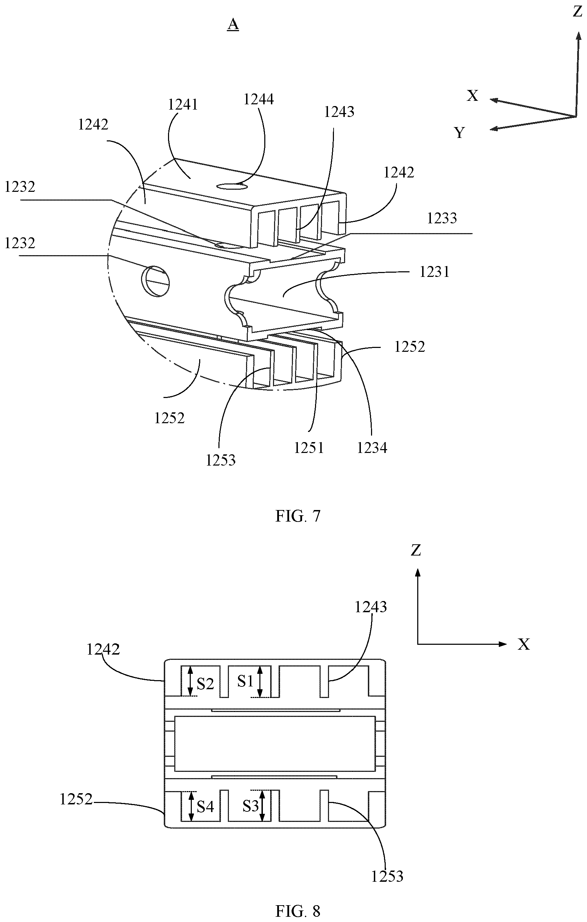

FIG. 5 shows a schematic three-dimensional view of a support 120 in an embodiment of the present application. FIG. 6 is a front view of a support 120 in FIG. 5. FIG. 7 is a partial enlarged view of an A portion in FIG. 5. FIG. 8 is a right view of a support 120 in FIG. 5. Optionally, as shown in FIG. 5, the support 120 may include a support body 123 and a first fixing member 124 stacked in the third direction Z. The first fixing member 124 is fixedly connected to the support body 123, and the first electrode output portion 111a and the second electrode output portion 112a are arranged in the first accommodating space 121 formed between the support body 123 and the first fixing member 124.

Optionally, the support body 123 may be in a plate-shaped structure, that is, the support body 123 is a hexahedron. For example, the support body 123 is a cuboid with six flat surfaces. For another example, the support body 123 is a hexahedron with partial uneven surfaces.

The first fixing member 124 is fixedly connected to the support body 123, which may refer to that the first fixing member 124 is fixedly connected to the support body 123 before or after the support 120 is assembled with the battery module 110.

In this embodiment, by the support body 123 and the first fixing member 124 stacked in the third direction Z, the first accommodating space 121 restricting the movement of the first electrode output portion 111a and the second electrode output portion 112a in the third direction Z can be formed, thereby reducing the risk of tearing at a joint between the first electrode output portion 111a and the second electrode output portion 112a.

Optionally, as shown in FIG. 6, the support body 123 includes a first end 1201 and a second end 1202 in the second direction Y, where the first fixing member 124 is fixedly connected to the first end 1201, and the first fixing member 124 and the second end 1202 form an opening.

The first fixing member 124 is fixedly connected to the first end 1201 of the support body 123, which may refer to that the first fixing member 124 and the first end 1201 are integrally formed, fixedly connected by an external fixing structure, or clamped. How to fixedly connect the first fixing member 124 to the first end 1201 is not limited in the embodiment of the present application. In addition, the opening is formed between the first fixing member 124 and the second end 1202, such that the first electrode output portion 111a and the second electrode output portion 112a after being electrically connected can be inserted into the first accommodating space 121 along the opening.

In this embodiment, the first fixing member 124 is fixedly connected to the first end 1201 of the support body 123 in the second direction Y, such that when assembled with the support 120, the battery module 110 can be inserted into the first accommodating space 121 along the opening between the first fixing member 124 and the second end 1202 of the support body 123 in the second direction Y, thereby reducing the assembly complexity of the battery module 110 and the support 120. In addition, the first fixing member 124 is fixedly connected to the first end 1201 of the support body 123, which can increase the energy density of the battery 100.

Optionally, in other embodiments, when the first fixing member 124 and the support body 123 are assembled between the first battery cell 111 and the second battery cell 112, the first fixing member 124 may be fixedly connected to the support body 123 through adhesive applying or filling.

For the battery 100 shown in FIG. 3, as shown in FIG. 5, the support 120 may further include a second fixing member 125 stacked with the support body 123 in the third direction Z, where the support body 123 is arranged between the first fixing member 124 and the second fixing member 125. The second fixing member 125 is fixedly connected to the support body 123, and the third electrode output portion 113a and the fourth electrode output portion 114a are arranged in the second accommodating space 122 formed between the support body (123) and the second fixing member 125.

The second fixing member 125 is fixedly connected to the support body 123, which may refer to that the second fixing member 125 is fixedly connected to the support body 123 before or after the support 120 is assembled with the battery module 110.

In this embodiment, by the support body 123 and the second fixing member 125 stacked in the third direction Z, the second accommodating space 122 restricting the movement of the third electrode output portion 113a and the fourth electrode output portion 114a in the third direction Z can be formed, thereby reducing the risk of tearing at a joint between the third electrode output portion 113a and the fourth electrode output portion 114a.

Optionally, as shown in FIG. 6, the second fixing member 125 is fixedly connected to the first end 1201 of the support body 123 in the second direction Y, and the second fixing member 125 and the second end 1202 of the support body 123 in the second direction Y form an opening.

The second fixing member 125 is fixedly connected to the first end 1201 of the support body 123, which may refer to that the second fixing member 125 and the first end 1201 are integrally formed, fixedly connected by an external fixing structure, or clamped. How to fixedly connect the second fixing member 125 to the first end 1201 is not limited in the embodiment of the present application. In addition, the opening is formed between the second fixing member 125 and the second end 1202, such that the third electrode output portion 113a and the fourth electrode output portion 114a after being electrically connected can be inserted into the second accommodating space 122 along the opening.

In this embodiment, the second fixing member 125 is fixedly connected to the first end 1201 of the support body 123 in the second direction Y, such that when assembled with the support 120, the battery module 110 can be inserted into the second accommodating space 122 along the opening between the second fixing member 125 and the second end 1202 of the support body 123 in the second direction Y, thereby reducing the assembly complexity of the battery module 110 and the support 120. In addition, the second fixing member 125 is fixedly connected to the first end 1201 of the support body 123, which can increase the energy density of the battery 100.

Optionally, in other embodiments, when the second fixing member 125 and the support body 123 are assembled between the third battery cell 113 and the fourth battery cell 114, the second fixing member 125 may be fixedly connected to the support body 123 through adhesive applying or filling.

In other embodiments, the first accommodating space 121 and/or the second accommodating space 122 can penetrate through the support 120 in the second direction Y. For the battery 100 shown in FIG. 2, the support body 123 and the first fixing member 124 are components independent of each other. During the assembly of the battery module 110 and the support 120, the support body 123 can be first inserted along the second direction Y to be below the first electrode output portion 111a and the second electrode output portion 112a electrically connected to each other, then the first fixing member 124 is moved down along the third direction Z to be above the first electrode output portion 111a and the second electrode output portion 112a, and the first fixing member 124 is fixedly connected to the support body 123, for example, the first fixing member 124 is clamped with the support body 123. For the battery 100 shown in FIG. 3, the support body 123, the first fixing member 124, and the second fixing member 125 may be components independent of one another. During the assembly of the battery module 110 and the support 120, the support body 123 can be first inserted along the second direction Y to be below the first electrode output portion 111a and the second electrode output portion 112a electrically connected to each other and above the third electrode output portion 113a and the fourth electrode output portion 114a electrically connected to each other, then the first fixing member 124 is moved down along the third direction Z to be above the first electrode output portion 111a and the second electrode output portion 112a, and the first fixing member 124 is fixedly connected to the support body 123, for example, the first fixing member 124 is clamped with the support body 123. Moreover, the second fixing member 125 is moved up along the third direction Z to be below the third electrode output portion 113a and the fourth electrode output portion 114a, and the second fixing member 125 is fixedly connected to the support body 123, for example, the second fixing member 125 is clamped with the support body 123.

Further, it is also possible to enhance the strength between the first fixing member 124 and/or the second fixing element 125 and the support body 123 through adhesive applying or filling on the basis that the first fixing member 124 and/or the second fixing element 125 are/is clamped with the support body 123.

Optionally, as shown in FIG. 7, the first fixing member 124 includes a first wall 1241 and two first side walls 1242, the first wall 1241 being arranged opposite to the support body 123, the two first side walls 1242 extending towards the support body 123 from two ends of the first wall 1241 in the first direction X; and the two first side walls 1242 and the support body 123 form the first accommodating space 121 in the third direction Z.

Specifically, the first fixing member 124 includes the first wall 1241 and the two first side walls 1242, where the first wall 1241 and the two first side walls 1242 form a cavity structure in a surrounding manner. For example, a cross section of the first fixing member 124 that is perpendicular to the second direction Y may be U-shaped. For another example, the first fixing member 124 may further include two side walls extending to the support body 123 from two ends of the first wall 1241 that are distributed in the second direction Y, where the two side walls are connected to the two first side walls 1242 in sequence from end to end, respectively, and form a cavity structure having an opening facing the support body 123 with the first wall 1241.

In this embodiment, the first fixing member 124 has a cavity, which can reduce the weight of the support 120, thereby reducing the weight of the battery 100.

Similarly, as shown in FIG. 7, the second fixing member 125 includes a second wall 1251 and two second side walls 1252, the second wall 1251 being arranged opposite to the support body 123, the two second side walls 1252 extending towards the support body 123 from two ends of the second wall 1251 in the first direction X; and the two second side walls 1252 and the support body 123 form the second accommodating space 122 in the third direction Z.

Specifically, the second fixing member 125 includes the second wall 1251 and the two second side walls 1252. The second wall 1251 and the two second side walls 1252 form a cavity structure in a surrounding manner. For example, a cross section of the second fixing member 125 that is perpendicular to the second direction Y may be U-shaped. For another example, the second fixing member 125 may further include two side walls extending to the support body 123 from two ends of the second wall 1251 that are distributed in the second direction Y, where the two side walls are connected to the two second side walls 1252 in sequence from end to end, respectively, and form a cavity structure having an opening facing the support body 123 with the second wall 1251.

In this embodiment, the second fixing member 125 has a cavity, which can further reduce the weight of the support 120, thereby reducing the weight of the battery 100.

Optionally, in other embodiments, the first fixing member 124 and/or the second fixing member 125 may be an internally solid hexahedron, such that the first electrode output portion 111a and the second electrode output portion 112a electrically connected to each other can be arranged between the two walls of the first fixing member 124 that are opposite to the support body 123, and the third electrode output portion 113a and the fourth electrode output portion 114a electrically connected to each other can be arranged between the two walls of the second fixing member 125 that are opposite to the support body 123.

Optionally, continuing referring to FIG. 7 and FIG. 8, first reinforcing ribs 1243 extending towards the support body 123 from the first wall 1241 are arranged between the two first side walls 1242.

In this embodiment, the first reinforcing ribs 1243 are arranged on the first wall 1241, which can enhance the stiffness of the first wall 1241.

Optionally, the first reinforcing ribs 1243 can restrict the movement of the first electrode output portion 111a and the second electrode output portion 112a in the third direction Z.

In this embodiment, the first reinforcing ribs 1243 are arranged between the two first side walls 1242, which can restrict a movement space of the first electrode output portion 111a and the second electrode output portion 112a, thereby preventing the tearing caused by shaking of the first electrode output portion 111a and the second electrode output portion 112a when the battery 100 is subjected to shock.

Further optionally, in the third direction Z, the first reinforcing ribs 1243 are closer to the first electrode output portion 111a and the second electrode output portion 112a than the two first side walls 1242.

In this embodiment, in the third direction Z, the first reinforcing ribs 1243 are set to be closer to the first electrode output portion 111a and the second electrode output portion 112a than the two first side walls 1242, which facilitates the support of the first electrode output portion 111a and the second electrode output portion 112a, thereby avoiding the shaking of the first electrode output portion 111a and the second electrode output portion 112a.

When the first wall 1241 is a plane, as shown in FIG. 8, a size of the first reinforcing ribs 1243 is S1, and a size of the first side walls 1242 is S2, where S1 is greater than S2.

Similarly, referring to FIG. 7 and FIG. 8, second reinforcing ribs 1253 extending towards the support body 123 from the second wall 1251 are arranged between the two second side walls 1252.

In this embodiment, the second reinforcing ribs 1253 are arranged on the second wall 1251, which can enhance the stiffness of the second wall 1251.

Optionally, the second reinforcing ribs 1253 are configured to restrict the movement of the third electrode output portion 113a and the fourth electrode output portion 114a in the third direction Z.

In this embodiment, the second reinforcing ribs 1253 are arranged between the two second side walls 1252, which can restrict a movement space of the third electrode output portion 113a and the fourth electrode output portion 114a, thereby preventing the tearing caused by shaking of the third electrode output portion 113a and the fourth electrode output portion 114a when the battery 100 is subjected to shock.

Further optionally, in the third direction Z, the second reinforcing ribs 1253 are closer to the third electrode output portion 113a and the fourth electrode output portion 114a than the two second side walls 1252.

In this embodiment, in the third direction Z, the second reinforcing ribs 1253 are set to be closer to the third electrode output portion 113a and the fourth electrode output portion 114a than the two second side walls 1252, which facilitates the support of the third electrode output portion 113a and the fourth electrode output portion 114a, thereby avoiding the shaking of the third electrode output portion 113a and the fourth electrode output portion 114a.

When the second wall 1251 is a plane, as shown in FIG. 8, in the third direction Z, a size of the second reinforcing ribs 1253 is S3, and a size of the second side walls 1252 is S4, where S3 is greater than S4.

Optionally, as shown in FIG. 7 and FIG. 8, the multiple first reinforcing ribs 1243 may be arranged on the first wall 1241, and optionally, the multiple first reinforcing ribs 1243 may be arranged at intervals along the first direction X. Optionally, the multiple first reinforcing ribs 1243 may also be arranged at intervals along the second direction Y. Further, the multiple first reinforcing ribs 1243 may be arranged crosswise along the first direction X and the second direction Y.

In this embodiment, the multiple first reinforcing ribs 1243 are arranged along the first direction X and/or the second direction Y, which can enhance the support of the first electrode output portion 111a and the second electrode output portion 112a.

Similarly, as shown in FIG. 7 and FIG. 8, the multiple second reinforcing ribs 1253 may be arranged on the second wall 1251, and optionally, the multiple second reinforcing ribs 1253 may be arranged at intervals along the first direction X. Optionally, the multiple second reinforcing ribs may also be arranged at intervals along the second direction Y. Further, the multiple second reinforcing ribs 1253 may be arranged crosswise along the first direction X and the second direction Y.

In this embodiment, the multiple second reinforcing ribs 1253 are arranged along the first direction X and the second direction Y, which can enhance the support of the third electrode output portion 113a and the fourth electrode output portion 114a.

Optionally, continuing referring to FIG. 7, the first wall 1241 is provided with a first adhesive injection flow hole 1244 configured to introduce a structural adhesive between the first electrode output portion 111a and the support 120 and between the second electrode output portion 112a and the support; and the first electrode output portion 111a and the second electrode output portion 112a are fixedly connected to the support 120 by the structural adhesive.

That is to say, the first electrode output portion 111a and the second electrode output portion 112a can be fixedly connected to the support 120 by the structural adhesive filled in the first adhesive injection flow hole 1244.

In this embodiment, the first electrode output portion 111a and the second electrode output portion 112a are fixedly connected to the support 120 by the structural adhesive, which can enhance the stiffness between the battery module 110 and the support 120, thereby avoiding the shaking of the first electrode output portion 111a and the second electrode output portion 112a in the first accommodating space 121 of the support 120 after the first electrode output portion is electrically connected to the second electrode output portion, and reducing the risk of tearing.

Optionally, as shown in FIG. 7, the support body 123 has a cavity 1231.

In this embodiment, the support body 123 is set to be in a structure with the cavity 1231, which can reduce the weight of the support 120, thereby reducing the weight of the battery 100.

In other embodiments, the support body 123 may be in a solid structure.

Continuing referring to FIG. 7, at least one wall of the cavity 1231 is provided with a second adhesive injection flow hole 1232. Optionally, for the battery 100 shown in FIG. 2, the second adhesive injection flow hole 1232 is configured to introduce a structural adhesive between the support 120 and at least one of the first battery cell 111 and the second battery cell 112; and the at least one battery cell is fixedly connected to the support 120 by the structural adhesive. For the battery 100 shown in FIG. 3, the second adhesive injection flow hole 1232 is configured to introduce a structural adhesive between the support 120 and at least one of the first battery cell 111, the second battery cell 112, the third battery cell 113, and the fourth battery cell 114; and the at least one battery cell is fixedly connected to the support 120 by the structural adhesive.

For the support 120 shown in FIG. 7, the first fixing member 124 is arranged above the support body 123, the second fixing member 125 is arranged below the support body 123, the second adhesive injection flow hole 1232 formed in the at least one wall of the cavity 1231 of the support body 123 can further introduce a structural adhesive between the third electrode output portion 113a and the support 120 and between the fourth electrode output portion 114a and the support, and the third electrode output portion 113a and the fourth electrode output portion 114a are fixedly connected to the support 120 by the structural adhesive.

In this embodiment, the battery cells are fixedly connected to the support 120 by the structural adhesive, which can enhance the stiffness between the battery module 110 and the support 120, thereby preventing relative movement of the battery module 110 and the support 120, and reducing the damage to the battery cells.

Optionally, continuing referring to FIG. 7, a wall of the support body 123 that is configured to support the first electrode output portion 111a and the second electrode output portion 112a is provided with a first accommodating groove 1233 extending along the second direction Y, the first accommodating groove 1233 accommodating a first sampling terminal configured to acquire a parameter of the first battery cell 111 and/or the second battery cell 112.

The first sampling terminal may be a temperature sensor, such as a negative temperature coefficient (NTC) temperature sensor. The first sampling terminal may also be a voltage sensor, a current detector, etc., and the type thereof is not limited in the embodiment of the present application.

In this embodiment, the wall of the support body 123 that is configured to support the first electrode output portion 111a and the second electrode output portion 112a is provided with the first accommodating groove 1233 to accommodate the first sampling terminal, such that the first battery cell 111 and/or the second battery cell 112 can be monitored in real time, thereby improving the safety of the battery 100.

Further, the first accommodating groove 1233 further accommodates a structural adhesive fixedly connecting the first sampling terminal to the support 120.

In this embodiment, the first sampling terminal is fixedly connected to the support 120 by the structural adhesive, which can avoid the shaking of the first sampling terminal, thereby improving the sampling accuracy of the first sampling terminal.

Similarly, continuing referring to FIG. 7, a wall of the support body 123 that is configured to support the third electrode output portion 113a and the fourth electrode output portion 114a is provided with a second accommodating groove 1234 extending along the second direction, the second accommodating groove 1234 accommodating a second sampling terminal configured to acquire a parameter of the third battery cell 113 and/or the fourth battery cell 114.

The second sampling terminal may be a temperature sensor, such as an NTC temperature sensor. The second sampling terminal may also be a voltage sensor, a current detector, etc., and the type thereof is not limited in the embodiment of the present application.

In this embodiment, the wall of the support body 123 that is configured to support the third electrode output portion 113a and the fourth electrode output portion 114a is provided with the second accommodating groove 1234 to accommodate the second sampling terminal, such that the third battery cell 113 and/or the fourth battery cell 114 can be monitored in real time, thereby improving the safety of the battery 100.

Further, the second accommodating groove 1234 further accommodates a structural adhesive fixedly connecting the second sampling terminal to the support 120.

In this embodiment, the second sampling terminal is fixedly connected to the support 120 by the structural adhesive, which can avoid the shaking of the second sampling terminal, thereby improving the sampling accuracy of the second sampling terminal.

Optionally, in this embodiment of the present application, in the third direction Z, the second fixing member 125 and the first fixing member 124 are symmetrically arranged relative to the support body 123. The symmetrical arrangement may refer to that the second fixing member 125 and the first fixing member 124 are completely consistent in structure and symmetrical in position, or it may only refer to that the second fixing member 125 and the first fixing member 124 are symmetrical in position but not completely consistent in structure.

In this embodiment, the second fixing member 125 and the first fixing member 124 are symmetrically arranged relative to the support body 123, which can reduce the production difficulty of the support 120.

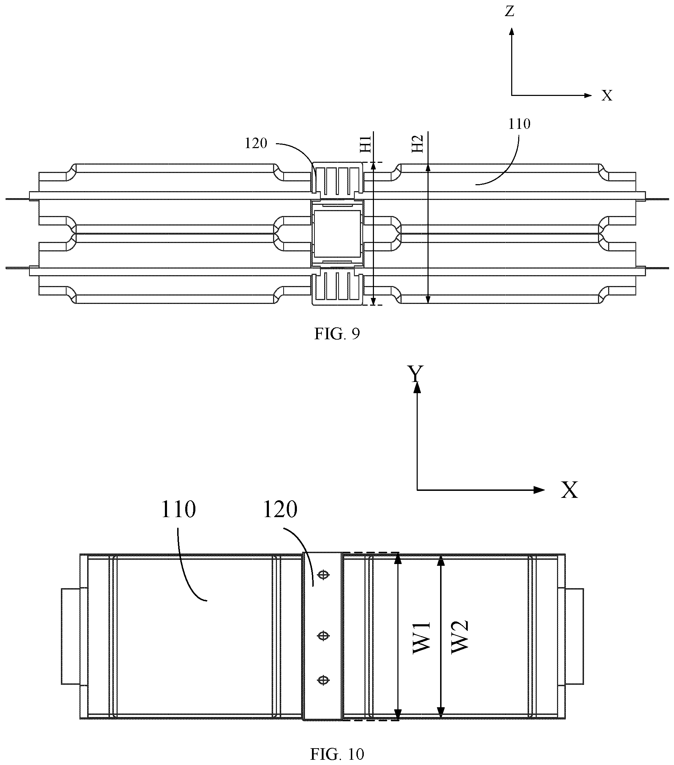

FIG. 9 is a front view of a battery 100 shown in FIG. 3. FIG. 10 is a top view of a battery 100 shown in FIG. 3. Optionally, as shown in FIG. 9, in the third direction Z, a size of the support 120 is H1, and a size of the battery module 110 is H2, where H1 is greater than H2. It should be understood that H2 may be the maximum size of the battery module 110 in the third direction Z. Optionally, as shown in FIG. 10, in the second direction Y, a size of the support 120 is W1, and a size of the battery module 110 is W2, where W1 is greater than W2.

In this embodiment, in the third direction Z and the second direction Y, the sizes H1 and W1 of the support 120 are set to be greater than the sizes H2 and W2 of the battery module 110, respectively, such that when the battery 100 is subjected to vibration and shock, the support 120 can be first in contact with the case to play a buffering role, thereby reducing the damage to the battery cells.

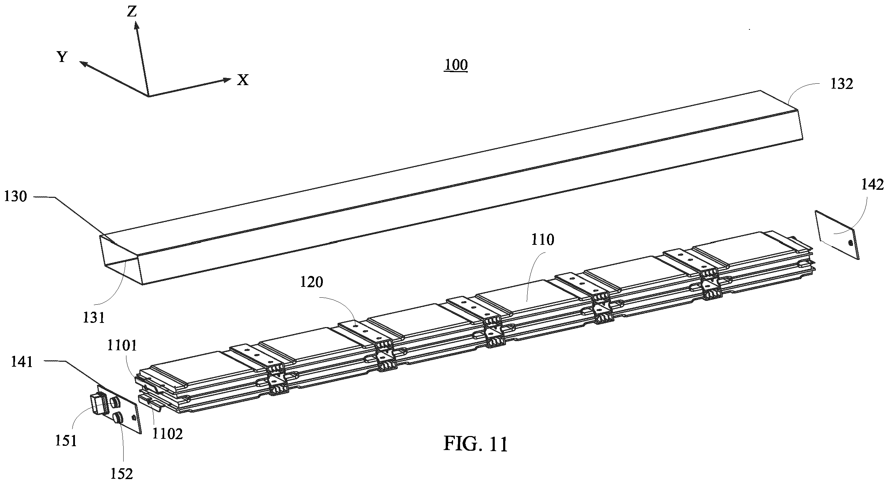

FIG. 11 shows a schematic exploded view of a battery 100 according to an embodiment of the present application. As shown in FIG. 11, the battery 100 further includes a case 130 configured to accommodate the battery module 110 and the support 120.

In an embodiment, the case 130 may be a metal case, for example, the case 130 may be an aluminum case. In this case, the support 120 is an insulating support, to avoid the contact between the case 130 and the electrode output portion between the battery cells in the battery module 110, thereby improving the safety of the battery 100. For example, the support 120 is a plastic support.

In another embodiment, the case may be an insulating case, for example, the case 130 is a plastic case. In this case, the support 120 may be a support made of any material.

In this embodiment, the battery module 110 and the support 120 are arranged in the case 130, which can reduce the risk of damage to the battery cells when the battery 100 is subjected to vibration and shock.

Optionally, the case 130 is provided with an opening; and the battery 100 further includes an end cover configured to cover the opening to encapsulate the battery module 110 and the support 120 in the case 130. It should be noted that the number and positions of openings are not limited in the embodiment of the present application. For example, the case 130 may be provided with one opening formed in any direction, and correspondingly, the battery 100 includes one end cover. For another example, the case 130 may be provided with two openings oppositely formed along any direction, and correspondingly, the battery 100 includes two end covers.

Further, the end cover is further provided with a positive electrode terminal and a negative electrode terminal, the positive electrode terminal being electrically connected to a positive electrode output portion of the battery module 110, the negative electrode terminal being electrically connected to a negative electrode output portion of the battery module 110.

As shown in FIG. 11, the case 130 is provided with a first opening 131 and a second opening 132 along the first direction X; and the battery 100 further includes a first end cover 141 and a second end cover 142, the first end cover 141 and the second end cover 142 being configured to cover the first opening 131 and the second opening 132 of the case 130, respectively, to encapsulate the battery module 110 and the support 120 in the case 130. For example, the first end cover 141 covers the first opening 131, and the second end cover 142 covers the second opening 132.

The positive electrode output portion 1101 of the battery module 110 is electrically connected to the positive electrode terminal 151, the negative electrode output portion 1102 is electrically connected to the negative electrode terminal 152, and the positive electrode terminal 151 and the negative electrode terminal 152 are arranged in a same one of the two end covers, for example, both the positive electrode terminal 151 and the negative electrode terminal 152 are arranged on the first end cover 141.

In other words, the positive electrode output portion 1101 and the negative electrode output portion 1102 of the battery module 110 are arranged at a same end of the battery module 110 along the first direction X.

An embodiment of the present application further provides a power consuming device. The power consuming device may include the battery 100 in the various foregoing embodiments, to provide electric energy for the power consuming device. Optionally, the power consuming device may be a vehicle, a ship, or a spacecraft.

The battery 100 according to the foregoing embodiment is arranged in a power consuming device. The support 120 is arranged between the first battery cell 111 and the second battery cell 112 connected in series, and the connecting portions of the two battery cells are arranged in the accommodating space of the support, such that the joint between the battery cells can be better fixed to prevent shaking of the joint, thereby reducing the risk of tearing at the joint; in addition, the support 120 can enhance the overall stiffness of the battery module 110, thereby facilitating the battery module 110 to be assembled into the case.

While the present application has been described with reference to preferred embodiments, various modifications may be made thereto and components therein may be replaced with equivalents without departing from the scope of the present application. In particular, the various technical features mentioned in the various embodiments may be combined in any manner as long as there is no structural conflict. The present application is not limited to the specific embodiments disclosed herein, but includes all technical solutions falling within the scope of the claims.

## Claims

1. A battery (100), comprising:
a battery module (110), comprising a first battery cell (111) and a second battery cell (112) connected in series along a first direction (X), wherein a first electrode output portion (111a) of the first battery cell (111) is electrically connected to a second electrode output portion (112a) of the second battery cell (112) by means of welding, and the first direction (X) is a length direction of the battery (100); and
a support (120), arranged between the first battery cell (111) and the second battery cell (112), wherein the support (120) is provided with a first accommodating space (121) penetrating through the support (120) in the first direction (X) and configured to accommodate the first electrode output portion (1 11a) and the second electrode output portion (112a).

2. The battery (100) according to claim 1, wherein the support (120) comprises:
a support body (123); and
a first fixing member (124), stacked with the support body (123) in a third direction (Z), the third direction (Z) being a thickness direction of the battery (100);
wherein the first fixing member (124) is fixedly connected to the support body (123), and the first electrode output portion (111a) and the second electrode output portion (112a) are arranged in the first accommodating space (121) formed between the support body (123) and the first fixing member (124).

3. The battery (100) according to claim 2, wherein the support body (123) comprises a first end (1201) and a second end (1202) in a second direction (Y), the second direction (Y) is a width direction of the battery (100); and the first fixing member (124) is fixedly connected to the first end (1201), and the first fixing member (124) and the second end (1202) form an opening.

4. The battery (100) according to claim 3, wherein the first fixing member (124) comprises a first wall (1241) and two first side walls (1242), the first wall (1241) being arranged opposite to the support body (123), the two first side walls (1242) extending towards the support body (123) from two ends of the first wall (1241) in the first direction (X), respectively; and the two first side walls (1242) and the support body (123) form the first accommodating space (121) in the third direction (Z).

5. The battery (100) according to claim 4, wherein first reinforcing ribs (1243) extending towards the support body (123) from the first wall (1241) are arranged between the two first side walls (1242).

6. The battery (100) according to claim 5, wherein in the third direction (Z), the first reinforcing ribs (1243) are closer to the first electrode output portion (111a) and the second electrode output portion (112a) than the two first side walls (1242).

7. The battery (100) according to claim 5 or 6, wherein the multiple first reinforcing ribs (1243) are distributed at intervals along the first direction (X) or the second direction (Y); alternatively, the multiple first reinforcing ribs (1243) are distributed crosswise along the first direction (X) and the second direction (Y).

8. The battery (100) according to any one of claims 4 to 7, wherein the first wall (1241) is provided with a first adhesive injection flow hole (1244) configured to introduce a structural adhesive between the first electrode output portion (111a) and the support (120) and between the second electrode output portion (112a) and the support; and the first electrode output portion (111a) and the second electrode output portion (112a) are fixedly connected to the support (120) by the structural adhesive.

9. The battery (100) according to any one of claims 2 to 8, wherein the battery module (110) further comprises
a third battery cell (113) and a fourth battery cell (114) connected in series along the first direction (X), wherein a third electrode output portion (113a) of the third battery cell (113) is electrically connected to a fourth electrode output portion (114a) of the fourth battery cell (114) by means of welding, the third battery cell (113) and the first battery cell (111) are stacked along the third direction (Z), and the fourth battery cell (114) and the second battery cell (112) are stacked along the third direction (Z); and
the support (120) further comprises
a second fixing member (125) stacked with the support body (123) in the third direction (Z), wherein the support body (123) is arranged between the first fixing member (124) and the second fixing member (125);
wherein the second fixing member (125) is fixedly connected to the support body (123), and the third electrode output portion (113a) and the fourth electrode output portion (114a) are arranged in a second accommodating space (122) between the support body (123) and the second fixing member (125).

10. The battery (100) according to claim 9, wherein in the third direction (Z), the second fixing member (125) and the first fixing member (124) are symmetrically arranged relative to the support body (123).

11. The battery (100) according to claim 9 or 10, wherein the support body (123) has a cavity (1231).

12. The battery (100) according to claim 11, wherein at least one wall of the cavity (1231) is provided with a second adhesive injection flow hole (1232) configured to introduce a structural adhesive between the support (120) and at least one of the first battery cell (111), the second battery cell (112), the third battery cell (113), and the fourth battery cell (114); and the at least one battery cell is fixedly connected to the support (120) by the structural adhesive.

13. The battery (100) according to any one of claims 9 to 12, wherein a wall of the support body (123) that is configured to support the first electrode output portion (111a) and the second electrode output portion (112a) is provided with a first accommodating groove (1233) extending along the second direction, the first accommodating groove (1233) accommodating a first sampling terminal configured to acquire a parameter of the first battery cell (111) and/or the second battery cell (112).

14. The battery (100) according to claim 13, wherein the first accommodating groove (1233) further accommodates a structural adhesive fixedly connecting the first sampling terminal to the support (120).

15. The battery (100) according to any one of claims 1 to 14, wherein in the second direction (Y), a size of the support (120) is greater than a size of the battery module (110); and/or
in the third direction (Z), a size of the support (120) is greater than a size of the battery module (110).

16. The battery (100) according to any one of claims 1 to 15, further comprising
a case (130) configured to accommodate the battery module (110) and the support (120).

17. The battery (100) according to claim 16, wherein the case (130) is provided with an opening; and the battery (100) further comprises
an end cover configured to cover the opening to encapsulate the battery module (110) and the support (120) in the case (130);
wherein the end cover is provided with a positive electrode terminal (151) and a negative electrode terminal (152), the positive electrode terminal (151) being electrically connected to a positive electrode output portion (1101) of the battery module (110), the negative electrode terminal (152) being electrically connected to a negative electrode output portion (1102) of the battery module (110).

18. A power consuming device, comprising the battery (100) according to any one of claims 1 to 17, wherein the battery (100) is configured to provide electric energy for the power consuming device.
